# EUROPEAN PATENT SPECIFICATION

(11) **EP 2 997 205 B1**
(45) Date of publication and mention of the grant of the patent: **30.12.2020**
(21) Application number: 14797463.8
(22) Date of filing: 14.05.2014
(51) Int. Cl.: E04F 13/08, E04B 2/74, E04B 1/61, E04F 13/04, E04B 2/72

(54) **A METHOD FOR JOINING BUILDING BOARDS**
VERFAHREN ZUM VERBINDEN VON BAUPLATTEN
PROCÉDÉ DE LIAISON DE PANNEAUX DE CONSTRUCTION

(30) Priority: 14.05.2013 SE 1300335
(43) Date of publication of application: 23.03.2016
(73) Proprietor: Atricon AB, 65226 Karlstad (SE)
(72) Inventor: JOHANSSON, Patrick, 660 60 Molkom (SE)
(74) Representative: Reiner, Per Jörgen
(86) International application number: PCT/SE2014/050585
(87) International publication number: WO 2014/185854

(56) References cited:
- WO-A1-98/04841
- WO-A1-2010/044739
- DE-U1- 8 715 783
- DE-U1-202006 005 730
- FR-A- 721 819
- FR-A1- 2 810 060
- GB-A- 2 220 217
- US-A- 2 379 179
- US-A- 2 966 708
- US-A- 3 675 383
- US-A1- 2011 220 030
- US-B1- 6 446 414
- US-B2- 8 266 863

## Description

The present invention relates to method for joining of a first building board and second building board by means of a board fixture, which board fixture comprises a first, front flange portion, a second, rear flange portion, and a web portion inter-connecting the flange portions giving the board fixture an H-shaped cross-section,wherein:
- the first flange portion and the second flange portion each comprises a first flange section and a second flange section,
- the first flange section of the first flange portion, the web portion and the first flange section of the second flange portion form a first pocket for receiving an edge portion of the first building board,
- the second flange section of the first flange portion, the web portion and the second flange section of the second flange portion form a second pocket for receiving an edge portion of the second building board,
- at least one of the first flange sections comprises a locking member which extends into the first pocket, and
- at least one of the second flange sections comprises a locking member which extends into the second pocket.

In particular, the present invention relates to a method and a board fixture according to the above wherein the building boards are wall boards or wall panels.

In the context of this specification, the term "building board" or "board" is understood to comprise building boards and other types of constructions panels for indoor and/or outdoor use.

The use of building boards provides a smooth and, in principle, "ready" surface, i.e. a surface which requires comparatively little extra work before painting or hanging of wallpaper can take place, and a tight and durable surface on external walls, respectively. Common materials for building boards are plaster, MDF (Medium Density Fibre), OSB (Orientated Strand Board), chips, wood particles, magnesium oxide, calcium silicate, fibre cement, composite, cement and glass fibres. Building boards are used in floor, wall and ceiling constructions. The support onto which the building boards are typically mounted can be vertical studs of steel or wood, horizontal joists or rails, or a combination of these, but also a wall of concrete, or a plastered surface, or the like, can be subjected to covering with building boards.

A common use of building boards is in so called light building, where a framework of wood or steel studs forms a support for the boards. Wall frameworks are formed by horizontal top and bottom joists (rails), between which vertical studs are mounted at a mutual distance of 450-600 mm. Frameworks for ceilings and floors are formed in a similar way. After that, the building boards are mounted on this framework by screwing the boards to the studs.

It takes approximately 20 screws per square meter to mount such a building board. This means that about 50-70 screws need to be used for every board, depending on the size of the board. As a result of the monotonous and repetitive work to be performed by screwing, few building board installers who work daily with mounting walls can work on this until retirement. An installer assembles in average approximately 7 boards per hour, which generates approximately 3000 monotonous mounting operations in a day. Therefore, repetitive strain injuries to shoulders, neck and back are common among installers. It is also common that installers get white fingers, caused by vibrations from screw driving machines.

The large number of screw may also cause problems for the board construction. As the outer surface of the boards is generally to be smooth and level, screws must usually be screwed into the board to a distance where the head of the screw does no longer protrude above the surface of the board. This may cause problems, especially near the board edges, since the penetrating screws may sometimes split the edge of the board, jeopardizing the structural integrity of the board and hampering subsequent puttying. This problem is accentuated by the fact that the board edges are the areas that requires the most number of screws in order to secure a level joint even when adjacent boards are subjected to bending. Uneven joints may also result when sheet metal studs are used to support the building boards. Sometimes when a board is mounted to a metal stud, the rotating action of the screws may pleat the stud, making the next board that shares the stud and completes the joint assembly; end up at a different level than the first board. This causes great costs since considerable puttying work is required in such cases. In severe cases the wall may even have to be torn down, the pleated stud replaced and the wall rebuilt.

Another problem associated with using screws to mount building boards is that the studs must be placed according to the chosen board format, i.e. with a mutual distance of 450 mm (450 mm/cc) when 900 mm wide boards are used, and 600 mm/cc when 1200 mm wide boards are used. Normally, 900 mm/cc is sufficient as far as the structural integrity of the wall constriction is concerned. However, the physical handling of a 1200 mm wide board is much more demanding than the handling of a 900 mm boards. Consequently, 900 mm wide boards are usually chosen over 1200 mm wide boards, resulting in a denser stud structure than required, which of course cost money and impacts negatively on the environment in terms of resource usage.

Recently, adhesive agents have replaced screws in some board fixtures having through-openings which allow the adhesive agent to interconnect the building boards. For example, such a board fixture is disclosed in EP2344702 A2. However, such board fixtures only confer a limited bending resistance to the board joint assembly since the boards are only fixed to each other via adhesive applied to the end or edge surfaces of the boards. This essentially only confers a sheet action structural stability to the board joint assembly, but no bending resistance. A further problem is that the adhesive is applied during assembly, providing an environmental impact and additional costs for the additional step of applying the adhesive. Furthermore, not all building boards have surfaces which are suitable for forming a bond with an adhesive agent. For example, a gypsum board, or drywall, is generally made of gypsum plaster arranged between two sheets of paper. The strength of a gypsum board is to a large extent dependent on the structural integrity of the paper layers, and applying an adhesive bond onto the surface of a gypsum board may jeopardise this structural integrity. Furthermore, regulations normally require that adhesive agents used in board fixtures are water-based. In order for the curing process to work, this requires building board assembly work to be carried out at temperatures above freezing which, in turn, means that the method can not be used during a significant part of the year. Yet another disadvantage of using an adhesive agent in building board fixture is that boards cannot be removed without destroying the boards. This is a problem, for example, if electrical work in a wall construction needs to be corrected.

It is also known to use board fixtures which have punched-out sections arranged to penetrate into the end surfaces of the building boards when they are inserted into the fixture. However, such fixtures only fixate the boards in a direction which is transversal to the wall structure and provide only limited resistance to bending and essentially no tensile strength. Also, this method of joining building boards does not work on boards having compact and strong surfaces.

Also, H-shaped board fixtures without through-openings are available. However, such fixtures provide only a positioning function and a wind-proof joint and, therefore, are normally used only in integrated board constructions, e.g. providing wind-proof layers in outer walls.

DE 20 2006 005 730 U1 and WO 98/04841 A1 show methods to join building boards by means of a board fixture.

An object of the present invention is to provide a method of joining building boards using a board fixture, which enables the production of a mechanically strong and flush board joint without using penetrating fastening means, e.g. screws or nails, or adhesives, e.g. glue.

Another object of the present invention is to provide a method of mounting building boards using a board fixture, which enables the production of a board joint which does not require an underlying support, e.g. a stud, supporting the board fixture.

Another object is to bring forth a method that minimises the number of studs needed in a board construction.

A further object of the present invention is to provide a method of mounting building boards using a board fixture, which enables the production of a board joint which is resilient to bending.

Yet a further object of the present invention is to provide a method which facilitates puttying of the board joint.

A further object of the present invention is to provide a method of joining building boards using a board fixture, which enables the production of a board joint which allows the boards to expand and retract, e.g. due to thermal expansion or moisture absorption.

A further object is to bring forth a method that allows the creation of a board joint having a high tensile strength.

Yet a further object of the present invention is to bring forth a method that allows controlled, non-destructive dismantling of a board joint.

These objects, and others, are obtained by a method according to the invention.

The method according to the invention comprises the steps defined by claim 1.

The particulars of the locking members, e.g. how they are designed and where they are positioned, are determined by the type of board the board fixture is to join and on the stresses the fixture is expected to be subjected to.

Locking members may be positioned on or integrated in the front flange portion, the rear flange portion or both the front and the rear flange portion. If locking members are positioned on or integrated in both the front flange portion and the rear flange portion, it may be advantageous to locate the locking members of the front flange at a different location, as seen in a transversal direction of the fixture, than the locking members of the rear flange portion. For example, the locking members of the front flange portion could be positioned closer to the web portion than the locking members of the rear flange portion.

Positioning locking members on the rear flange portion will impart resistance against pressure forces from the front of the board and fixture assembly since the width of the web section forms a space between the pressure point and the locking function provided by the locking members of the rear flange portion. Tensile stresses acting on the front surface of the mounted boards are for the same reason best countered by positioning locking members on the same side as the acting stress. For example, tensile stresses acting on a wall construction due to fastening a heavy load on the wall constriction, is best countered by positioning or integrating locking members in the front flange portion.

The locking members may be continuous or discontinuous in the longitudinal direction of the board fixture.

The width of the flange portions may be adapted to the desired function of the fixture. A wider flange portion allows the locking members to be positioned further from the edge portion of the building boards. This may for example be advantageous if the boards are porous and weak. Also, in order to further spread the load on a board, it may be advantageous to arrange a plurality of locking members on the same flange section, each locking member being positioned at different longitudinal locations.

The geometry of the cross-section of the board fixture may advantageously be adapted to contribute to the bending stiffness of the board joint. For example, the rear flange portion may advantageous be wider than the front flange portion.

It may be advantageous to provide the front flange portion with through-openings or holes such that putty or plaster may better adhere to the fixture during puttying or plastering. Such trough-openings may also allow the front flange portion to reinforce the applied putty or plaster and, possibly, do away with the need of applying a separate glass fibre reinforcing strip. Alternatively or additionally, the front flange portion may be provided with a rough front surface, which also improve adherence of putty or plaster to the fixture.

The board fixture used in a method according to the invention allows boards to be joined without underlying support, e.g. between vertical studs. This allows the boards to be fastened to an underlying framework at optional positions, e.g. at horizontal joists or rails. In particular, the boards need not necessarily be fastened to the underlying framework at the edge portion. This is advantageous since, as has been previously discussed, the edges portion of the boards may be damaged by screwing operations. Also, it allows the wall construction to be fastened to the framework using a minimal amount of screws. Consequently, the board fixture may advantageously be used in a wall construction to be mounted to a framework in which the horizontal distance between adjacent, vertical studs has been increased to save material and/or improve the acoustic properties of the wall construction.

Of course, the board fixture used in a method according to the invention still allows boards to be joined over an underlying stud, if this is required. Also, the board fixture itself may be mounted on an underlying support or base by screwing, nailing, riveting, hooking, snap, gluing or other similar attachment method which are known in the art.

As stated above, the method according to the invention comprises the steps of mutually aligning the board fixture and the boards such that the pockets assume an inclined orientation vis-à-vis the building boards. This alignment allows the edge portions of the boards to be received in the pockets without the locking members preventing the insertion of the edge portions into the pockets. In other words, said steps of aligning the board fixture and the boards give the edge portions free entry into the pockets.

As also stated above, the method according to the invention comprises the steps of mutually rotating the board fixture and the boards such that the locking members are brought to interact with and lock to the boards. Consequently, these steps will bring the boards from a first, unlocked position to a second, locked position.

Also, the method according to the invention comprises the step of directly or indirectly fastening the second board to the underlying structure once the second board has been brought into the locked position. This step will ensure that the second board cannot be counter-rotated such that the locking relationship between the locking members of the second pocket and the second board is undone, which, in turn, will ensure that the board fixture cannot be counter-rotated such that the locking relationship between the locking members of the first pocket and the first board is undone. Consequently, the step of fastening the second board to the underlying structure will secure that the board cannot become undone.

However, the board fixture used in a method according to the invention allows a controlled, non-destructive dismantling of the board joint simply by reversing the above-discussed steps, i.e. detaching the second board from the underlying structure, counter-rotating the second board vis-à-vis the board fixture, removing the second board from the board fixture, counter-rotating the board fixture vis-à-vis the first board, removing the board fixture from the first board, and, finally, detaching the first board from the underlying structure. This capability is advantageous when temporary wall constructions are to be built, or when changes or additions to assembled wall constructions need to be made.

The board fixture used in a method according to the invention allows the boards itself to be used as a tool during installation in that the width of the boards great a lever which may be utilized during the steps of mutually rotating the board fixture and the boards and bringing the boards into their locked positions. In particular, this lever may facilitate the penetration of the locking members into the boards, e.g. when the boards are gypsum boards.

It may be advantageous to make at least part of the board fixture, e.g. the front flange portion and/or the web portion, elastically deformable. This may allow the edge portions to temporarily widen the pockets when the boards are inserted such that the locking members may pass the edge portion until the locking interaction between the fixture and the board is brought about by said rotating step, at which stage the elasticity of the elastic deformable portions of the fixture will contribute to establish the locking interaction between the locking members and the boards.

In the following, the invention will be described in more detail with reference to the attached drawings, in which:
Fig. 1 shows a perspective view of a first embodiment of a board fixture used in a method according to the invention;
Fig. 2 shows a cross-sectional view of the board fixture according to Fig. 1;
Figs. 3 and 4 shows cross-sectional views of a first embodiment of building boards to be joined by the board fixture according to Figs. 1 and 2;
Figs. 5-8 shows cross-sectional views of the board fixture according to Figs. 1 and 2 and the building boards according to Figs. 3 and 4 during different phases of assembly;
Fig. 9 shows building boards used in a method according to a second embodiment of the invention mounted in the board fixture according to Figs. 1 and 2;
Figs. 10 and 11 show cross-sectional views of a third embodiment of building boards used in a method according to the invention;
Fig. 12 shows a cross-sectional view of the building boards according to Figs. 10 and 11 mounted in the board fixture according to Figs, 1 and 2;
Fig. 13 shows a perspective view of a second embodiment of a board fixture used in a method according to the invention;
Fig. 14 shows a cross-sectional view of a third embodiment of a board fixture used in a method according to the invention;
Fig. 15 shows a cross-sectional view of a fourth embodiment of board fixture used in a method according to the invention;
Fig. 16 shows a cross-sectional view of a fifth embodiment of board fixture used in a method according to the invention;
Fig. 17 shows a cross-sectional view of a sixth embodiment of board fixture used in a method according to the invention;
Fig. 18 shows a cross-sectional view of a seventh embodiment of board fixture used in a method according to the invention;
Fig. 19 shows a cross-sectional view of a eighth embodiment of board fixture used in a method according to the invention;
Figs. 20 and 21 show a cross-sectional view of a ninth embodiment of board fixture used in a method according to the invention;
Fig. 22 shows a cross-sectional view of the assembly according to Fig. 12 mounted on an underlying support.

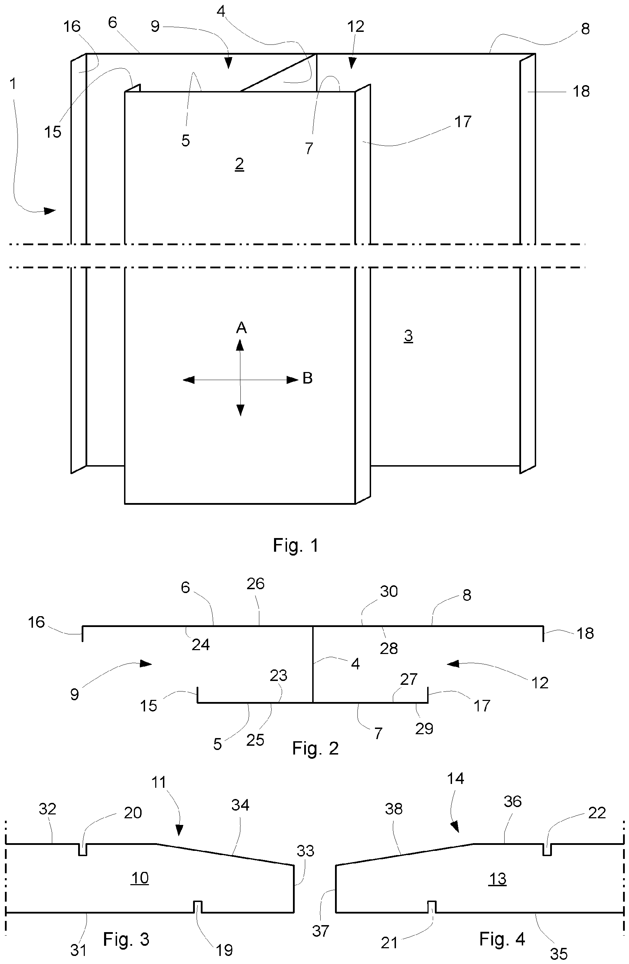

A first embodiment of a board fixture 1 used in a method according to the invention is disclosed in Figs. 1 and 2.

The board fixture 1 is elongated and, consequently, has an extension in a first, longitudinal direction A which is larger than its extension in a second, transversal direction B. In the longitudinal direction A, the board fixture 1, discloses a length, or height, which corresponds to the length, or height, of the building boards it is to join. Said height may for example be within the interval of 2000-3000 mm. In the transversal direction B, the board fixture may have a width which is within the interval of 50-70 mm. The board fixture 1 comprises a first, front flange portion or flange 2, and a second, rear flange portion or flange 3. The flanges 2, 3 are substantially rectangular and extend generally the whole length, or height, of the board fixture 1. In the transversal direction B, the rear flange 3 may for example have a width which is within the interval of 40-70 mm. The front flange 2, however, may have a width which is less than the width of the rear flange 3. In the transversal direction B, the width of the front flange 2 may for example be within the interval of 30-50 mm.

The board fixture further comprises a web portion or web 4, which connects the flanges 2, 3 to each other. The flanges 2, 3 extend substantially in parallel with each other and are connected at their centre lines by the web 4, which is also substantially rectangular. The web 4 forms a substantially right angle with the flanges 2, 3, dividing each flange 2, 3 into a first flange section, 5 and 6, respectively, and a second flange section, 7 and 8, respectively. Accordingly, the board fixture 1 exhibits a cross-section which is substantially H-shaped. The board fixture 1 exhibits a first elongated, open channel or pocket 9, which is adapted to receive an edge portion 10 of a first building board or panel 11 (cf. Fig. 3), and a second elongated, open channel or pocket 12, which is adapted to receive an edge portion 13 of a second building board or panel 14 (cf. Fig. 4), wherein the web 4 forms the bottom of the respective pocket 9, 12 and the flange sections 5, 6 and 7, 8, respectively, form the sides of the respective pocket 9, 12. The web 4 has advantageously a width corresponding to the thickness of the building panels the fixture 1 is to join, approximately 13 mm in the case of standard European gypsum board.

Each first flange section 5, 6 discloses a first, inner surface 23, 24, and a second, outer surface 25, 26 (cf. Fig. 2). Likewise, each second flange section 7, 8 discloses a first, inner surface 27, 28, and a second, outer surface 29, 30. The inner surfaces 23 and 24 are generally parallel and enclose the first pocket 9. Likewise, the inner surfaces 27 and 28 are generally parallel and enclose the second pocket 12.

Consequently, the first and second flange sections 5, 7 of the first flange portion 2 are arranged in a first plane, and the first and second flange sections 6, 8 of the second flange portion 3 are arranged in a second plane which is parallel to the first plane.

The flange sections 5 and 6 comprise locking members 15 and 16, respectively, arranged to interact with the edge portion 10 of the first building board 11 when it is inserted into the pocket 9. In the same way, the flange sections 7 and 8 comprise locking members 17 and 18, respectively, arranged to interact with the edge portion 13 of the second building board 14 when it is inserted into the pocket 12. Each locking member 15-18 extends generally perpendicular from the respective inner surface 23, 24, 27, 28 of the flange section 5-8 into the pockets 9 and 12.

In the present embodiment, the locking members 15-18 are positioned at the free ends of the flange sections 5-8. Furthermore, the locking members 15-18 have a generally rectangular shape and are continuous in the longitudinal direction of the board fixture 1, i.e. in the vertical direction as disclosed in Fig. 1.

Figs. 3 and 4 disclose first and second building boards 11 and 14 arranged to be joined together by the board fixture 1. The first building board 11 displays a first surface 31 forming the front or front surface of the board 11, and a second surface 32 forming the back or back surface of the board 11, which back surface 32 is generally parallel to the front surface 31. The first building board 11 further displays a third surface 33 forming an end surface of the board, which end surface 33 is generally orthogonal to the front and back surfaces 31, 32. The intersection between the back surface 32 and the end surface 33 is bevelled such that the board 11 discloses a fourth, bevelled surface 34. Likewise, the second building board 14 displays a first, front surface 35, a second, back surface 36, a third, end surface 37, and a fourth, bevelled surface 38.

The edge portion 10 of the first building panel 11 comprises recesses or cut-outs 19, 20 for accepting and interacting with the locking members 15 and 16, respectively. Likewise, the edge portion 13 of the second building board 14 comprises recesses or cut-outs 21, 22 for accepting and interacting with the locking members 17 and 18, respectively. In order to accommodate the continuous locking members 15-18, the cut-outs 19-22 run continuously along the length of the edge portions 10, 13, i.e. in the longitudinal direction A of the board fixture 1.

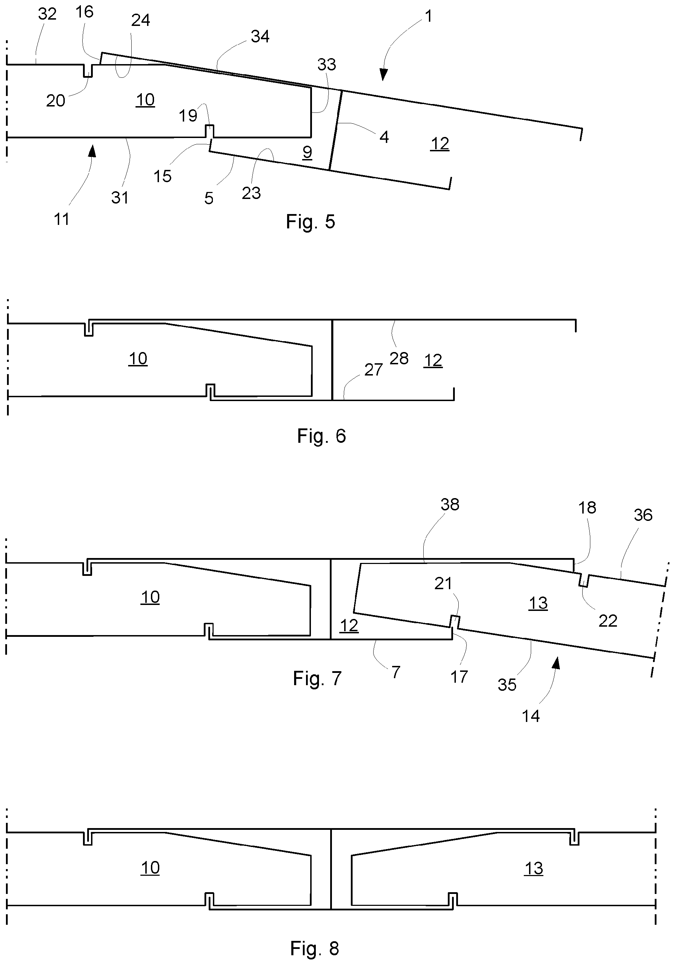

In the following, a method of joining two building boards 11 and 14 using the board fixture 1 will be disclosed in more detail with reference to Figs. 5-8. The building boards may for example by two wall panels, e.g. plywood panels.

The method comprises the initial step of directly or indirectly attaching or otherwise securing the first board 11 to an underlying support or base, e.g. a joist and stud framework (not disclosed).

The method then comprises the step of aligning the board fixture 1 in relation to the first board 11 such that the pocket 9 assumes an inclined orientation vis-à-vis the board 11. When in the inclined orientation, the edge portion 10 is allowed to be brought into the pocket 9 without the locking members 15 and 16 hindering the insertion, as is disclosed in Fig. 5. In principle, this implies orientating the board fixture 1 such that that flange section 5 becomes non-parallel to the front surface 31 of the board 11 and, in the present embodiment, such that the inner surface 24 becomes generally parallel to the bevelled surface 34 prior to bringing the pocket 9 over the edge portion 10. When the fixture 1 is in the inclined position, the fixture 1 is brought over the edge portion 10 until the recess 19 is in line with the locking member 15 and the recess 20 is in line with the locking member 16.

Thereafter, the board fixture 1 is rotated about an axis which runs in the longitudinal direction A of the fixture such that the inner surfaces 23, 24 of the fixture 1 are brought into contact with the back and front surfaces 32, 31 of the board 11, and such that locking members 15, 16 are brought into the recesses 19, 20, as is disclosed in Fig. 6. Once inserted into the recesses 19, 20, the locking members 15, 16 will interact with the board 11 and prevent the board 11 from moving in the transversal direction B in the pocket 9.

Optionally, the fixture 1 may now be attached or otherwise secured to the underlying support structure.

Thereafter, the second board 14 is brought into the second pocket 12 in a corresponding manner, i.e. by orientation the board 14 such that the front surface 35 becomes non-parallel to the flange section 7 and, in the present embodiment, such that the bevelled surface 38 becomes generally parallel to the inner surface 28, whereafter the edge portion 13 is inserted into the pocket 12 such that the locking members 17 and 18 are brought in line with the recesses 21 and 22. However, since the the fixture 1 is directly or indirectly secured to the underlying support structure, the board 14 and not the fixture 1 is now rotated about its longitudinal axis such that the inner surfaces 27 and 28 are brought into contact with the back and front surfaces 35 and 36, respectively, and such that locking members 17 and 18 are brought into the recesses 21 and 22, respectively, as is disclosed in Fig. 8. Once inserted into the recesses 21, 22, the locking members 17 and 18 will interact with the board 14 and prevent the board 14 from moving in the transversal direction B in the pocket 12 and the fixture 1 will be holding the boards 11 and 14 in a joint, level relationship.

In Fig. 8, the distance between the recess 19 and the end surface 33 is less than the distance between the locking member 15 and the web 4. Likewise, the distance between the recess 21 and the end surface 37 is less than the distance between the locking member 17 and the web 4. Consequently, when the boards 11 and 14 are mounted in the fixture 1, there will be a space between the web 4 and the end surface 33 and 37, respectively, giving the boards 11 and 14 room to expand in the transversal direction B of the fixture 1. This configuration may be advantageous of the boards 11, 14 may be subjected to thermal expansion or expansion due to moisture absorption.

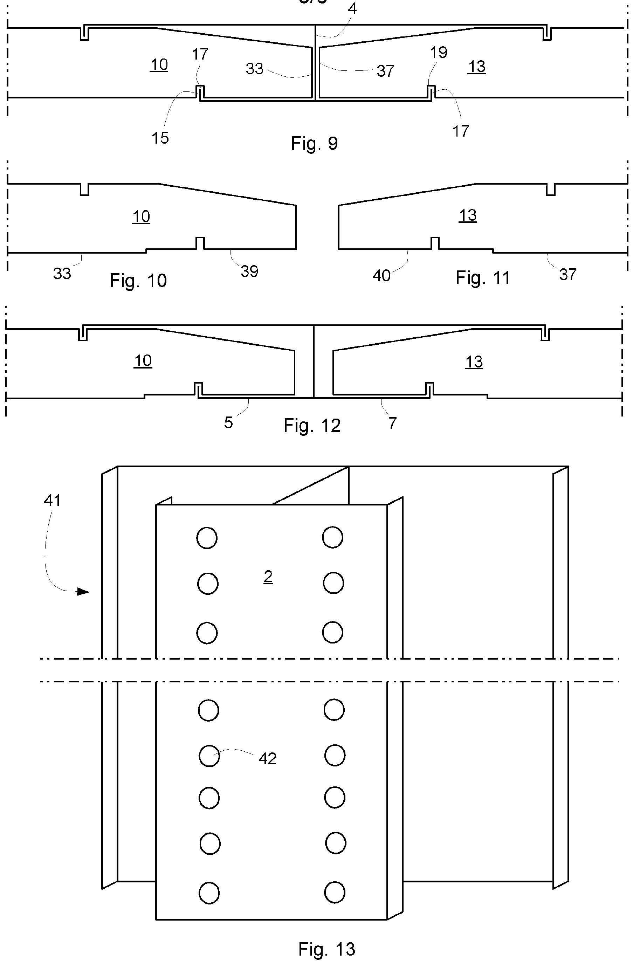

Fig. 9 discloses building boards according to a second embodiment of the invention, wherein the distance between the recess 19 and the end surface 33, and between the recess 21 and the end surface 37, is approximately the same as the distance between the web 4 and the locking members 15 and 17, respectively. This allows the edge portions 10 and 13 to come into contact with the web 4 when the boards 11, 14 are mounted in the fixture 1. This configuration may be advantageous in some situations since it provides a robust bond between the boards 11 and 14. However, it does not allow for expansion of the boards 11 and 14 in the transversal direction of the fixture 1 and, consequently, should preferably only be used when board expansion is not expected, e.g. when the boards are of gypsum.

Figs. 10 and 11 disclose building boards according to a third embodiment of the invention. Each front surface 31, 35 discloses a countersunk section 39, 40 which neighbours the end surface 33, 37. Consequently, when the boards are mounted in the fixture, the front flange sections 5 and 7 will be countersunk below the level of the front surfaces 31, 35, as is disclosed in Fig. 12, allowing level puttying of the board joint.

Fig. 13 discloses a second embodiment of a board fixture 41 used in a method according to the invention which has generally the same design and is arranged to receive and join building boards in the same way as the above-discussed board fixture 1. However, the front flange 2 of the board fixture 41 discloses a plurality of through-openings 42. When building boards have been positioned in the board fixture 41, the through-openings 42 will improve attachment of putty to the board fixture and building board assembly during puttying. It may be advantageous to use the board fixture 41 to join building boards of the type disclosed in Figs. 10 and 11.

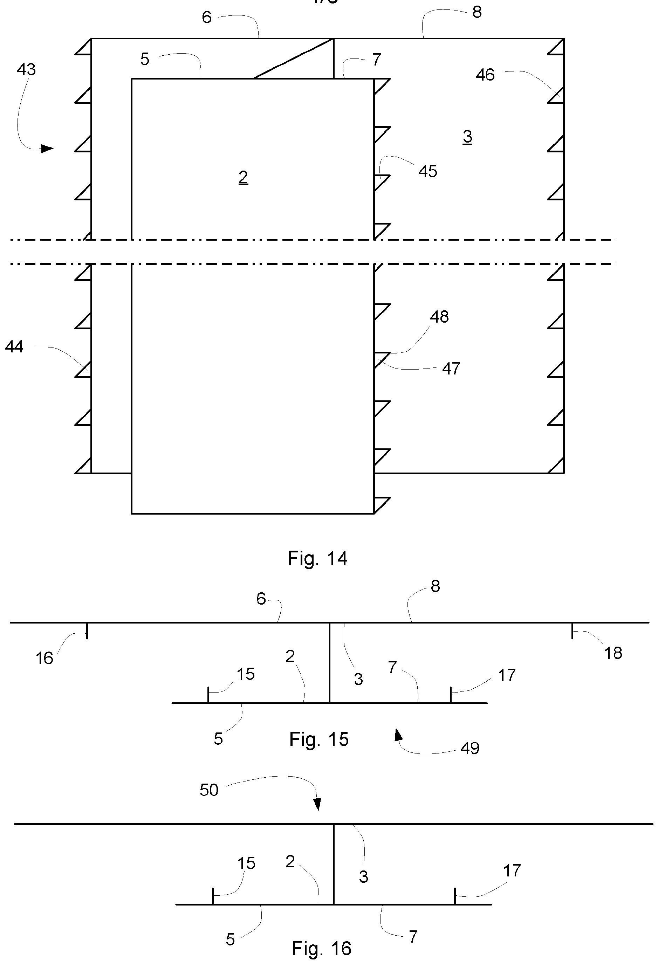

Fig. 14 discloses a third embodiment of a board fixture 43 used in a method according to the invention. The board fixture 43 has generally the same design and is also arranged to receive and join building boards in the same way as the above-discussed board fixture 1. The board fixture 43 comprises locking members 44-46 corresponding to the above-discussed locking members 15-18 (in Fig. 14 the locking member of the flange section 5 is not visible). However, in the present embodiment the locking members 44-46 are discontinuous in the longitudinal direction A of the board fixture 43. Each locking member 44-46 comprises a plurality of locking elements 47 which are arranged longitudinally along the free, longitudinal edges of the flange sections 5-8. Each locking element 47 extend generally orthogonally from the respective flange section 5-8. In the present embodiment, each locking element 47 has a generally triangular shape and comprises a point or an edge 48. This configuration makes the board fixture 43 well suited to join drywall or gypsum boards. As stated above, gypsum boards are generally made of gypsum plaster arranged between two sheets of paper. Consequently, it is not advisable to arranged continuous cut-outs in a gypsum board corresponding to the above-discussed cut-outs 19-22 as such cut-out would compromise the structural integrity of the gypsum board. However, by providing each locking element 47 with a point or an edge 48 capable of cutting through the paper layer of the gypsum board, no such cut-outs are required.

The gypsum boards are mounted in the fixture 43 in same way as the boards 11 and 14 are mounted in the previously disclosed fixture 1. However, instead of entering cut-outs, the locking elements 47 are brought to penetrate into the gypsum board when each gypsum board and the fixture 43 are mutually rotated. Also, by arranging the locking elements 47 spaced apart,e.g. as is disclosed in Fig. 14, the paper layers of the gypsum board will not be severed along a continuous line when the locking members 47 penetrated the board, thus assuring the structural integrity of the gypsum board.

Fig. 15 discloses a fourth embodiment of a board fixture 49 used in a method according to the invention where the locking members 15-18 are positioned inside of the free edges of the flange sections 5-8. This allows the front and rear flange portions 2, 3 to support the boards 11, 13 also outside of the locking members 15-18, which may be advantageous in some applications.

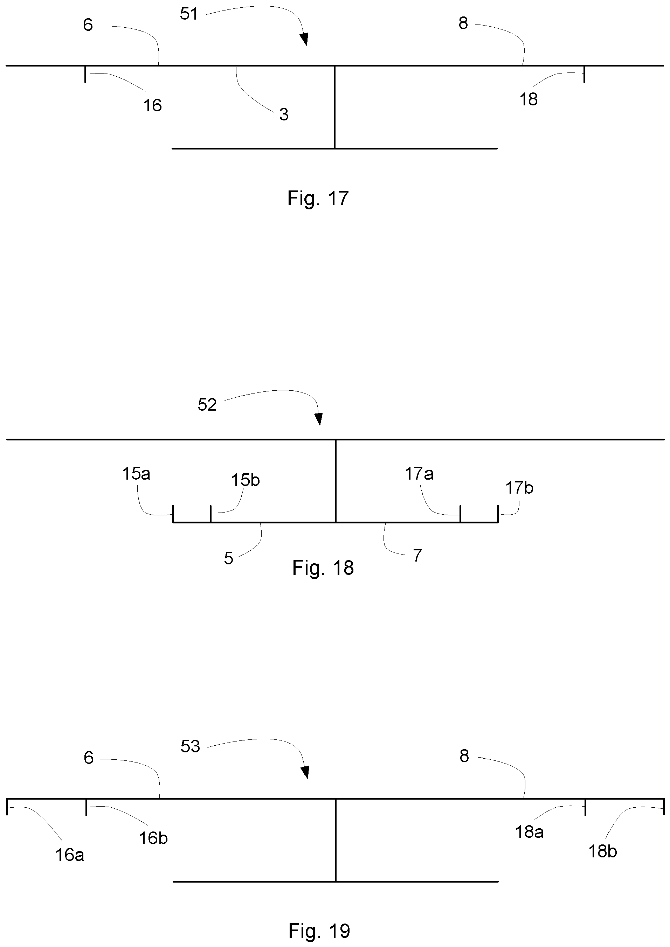

Fig. 16 discloses a fifth embodiment of a board fixture 50 used in a method according to the invention where only the front flange portion 2, i.e. the flange sections 5 and 7, comprises locking members 15, 17, and Fig. 17 discloses a sixth embodiment of a board fixture 51 where only the rear flange portion 3, i.e. the flange sections 6 and 8, comprises locking members 16, 18.

Fig. 18 and discloses a seventh embodiment of a board fixture 52 used in a method according to the invention where each front flange section 5 and 7 discloses two locking members 15a, 15b and 17a, 17b, respectively, which are positioned at different longitudinal positions. Fig. 19 discloses a corresponding eighth embodiment of a board fixture 53 according to the invention where each rear flange section 6 and 8 discloses two locking members 16a, 16b and 18a, 18b, respectively. This configuration may be advantageous when the load on the boards need to be distributed over a large area, e.g. when the boards are made of a porous and weak material. In a non-disclosed embodiment of a board fixture according to the invention, all flange sections 5-8 disclose a plurality of locking members.

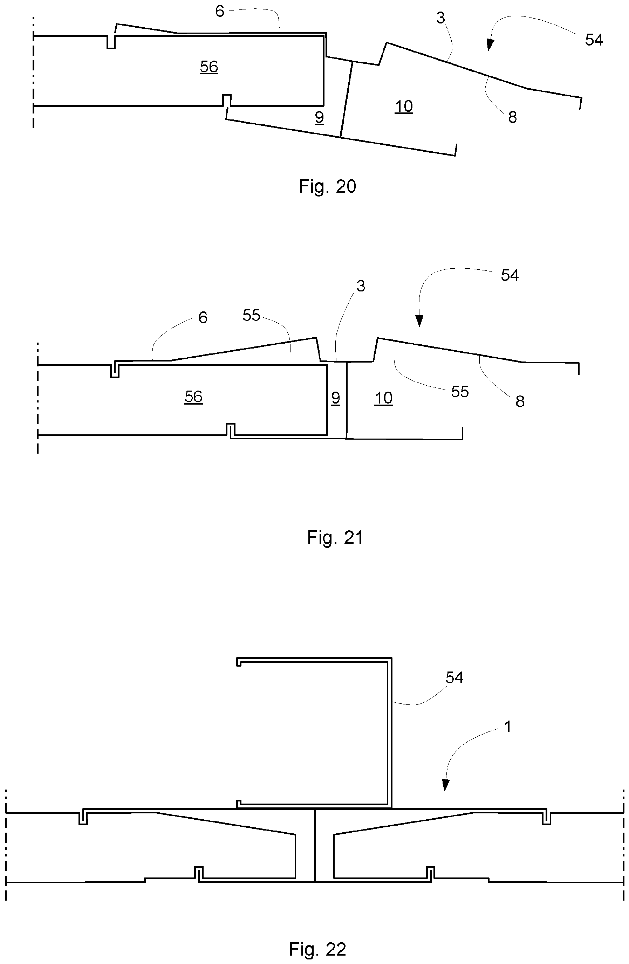

Figs. 20 and 21 discloses a ninth embodiment of a board fixture 54 used in a method according to the invention. In this embodiment, the rear flange portion 3 is not flat but each rear flange section 6, 8 discloses an indenture 55 which allows a non-bevelled board 56 to be inserted into the pockets 9, 12. This embodiment is advantageous since it does not require that the boards are bevelled prior to being used in the fixture 54. However, it may be less advantageous to use this embodiment in application where the fixture 54 needs to be attached or mounted on an underlying support, e.g. a stud.

As previously discussed, the board fixture used in a method according to the invention is capable of joining board fixtures without an underlying support, thus enabling free positioning of studs, e.g. in a wall construction. However, in some applications it may be advantageous to attach mount also the board fixture on an underlying support or base. Fig. 22 discloses such a configuration, where the board fixture 1 according to Figs. 1 and 2 is attached to an underlying support in the form of a stud 57.

Above, the invention has been disclosed with reference to a number of exemplary embodiments. However, the invention is not limited to these embodiments and the skilled person will realise that modifications and variants are possible within the scope of the following claims.

## Claims

1. A method for joining of a first building board (11) and second building board (14) by means of a board fixture (1, 41, 43, 49, 50, 52, 53, 54), which board fixture (1, 41, 43, 49, 50, 52, 53, 54) comprises a first, front flange portion (2), a second, rear flange portion (3), and a web portion (4) inter-connecting the flange portions (2, 3) giving the board fixture (1, 41, 43, 49, 50, 52, 53, 54) an H-shaped cross-section, wherein:
- the first flange portion (2) and the second flange portion (3) each comprises a first flange section (5, 6) and a second flange section (7, 8),
- the first flange section (5) of the first flange portion (2), the web portion (4) and the first flange section (6) of the second flange portion (3) form a first pocket (9) for receiving an edge portion (10) of the first building board (11),
- the second flange section (7) of the first flange portion (2), the web portion (4) and the second flange section (8) of the second flange portion (3) form a second pocket (12) for receiving an edge portion (13) of the second building board (14),
- at least one of the first flange sections (5, 6) comprises a locking member (15, 16) which extends into the first pocket (9), and
- at least one of the second flange sections (7, 8) comprises a locking member (17, 18) which extends into the second pocket (12),
which method comprises the steps of:
- aligning the board fixture (1) in relation to the first building board (11) such that the first pocket (9) assumes an inclined orientation vis-à-vis the first building board (11),
- bringing the first pocket (9) over the edge portion (10) of the first building board (11) such that the edge portion (10) of the first building board (11) is received in the first pocket (9), wherein during this step the locking member (15, 16) of the at least one first flange section (5, 6) does not prevent the insertion of the edge portion (10) of the first building board (11) into the first pocket (9) due to said inclined orientation,
- bringing the board fixture (1) and the first building board (11) to rotate in relation to each other such that the locking member (15, 16) of the at least one first flange section (5, 6) is brought to interact with the edge portion (10) of the first building board (11) preventing the first building board (11) from moving in a transversal direction (B) of the board fixture (1, 41, 43, 49, 50, 52, 53, 54),
- aligning the second building board (14) in relation to the board fixture (1) such that the second pocket (12) assumes an inclined orientation vis-à-vis the second building board (14),
- bringing the edge portion (13) of the second building board (14) into the second pocket (12) such that the edge portion (13) of the second building board (14) is received in the second pocket (12), wherein during said step the locking member (17, 18) of the at least one second flange section (7, 8) does not prevent the insertion of the edge portion (13) of the second building board (14) into the second pocket (12) due to said inclined orientation, and
- bringing the second building board (14) and the board fixture (1) to rotate in relation to each other such that the locking member (17, 18) of the at least one second flange section (7, 8) is brought to interact with the edge portion (13) of the second building board (14) preventing the second building board (14) from moving in the transversal direction (B) of the board fixture (1, 41, 43, 49, 50, 52, 53, 54).

2. The method according to claim 1, wherein the step of bringing the board fixture (1, 41, 43, 49, 50, 52, 53, 54) and the first building board (11) to rotate in relation to each other comprises bringing the board fixture (1, 41, 43, 49, 50, 52, 53, 54) and the first building board (11) to rotate in relation to each other about a first axis which runs in a longitudinal direction (A) of the board fixture (1).

3. The method according to any one of claims 1 and 2, wherein the step of bringing the second building board (14) and the board fixture (1, 41, 43, 49, 50, 52, 53, 54) to rotate in relation to each other comprises bringing the second building board (14) and the board fixture (1, 41, 43, 49, 50, 52, 53, 54) to rotate in relation to each other about a second axis which runs in the longitudinal direction (A) of the board fixture (1, 41, 43, 49, 50, 52, 53, 54).

4. The method according to any one of the preceding claims, wherein the step of aligning the board fixture (1, 41, 43, 49, 50, 52, 53, 54) in relation to the first building board (11) is preceded by a step of directly or indirectly attaching the first building board (11) to an underlying support or base.

5. The method according to any one of the preceding claims, wherein the step of bringing the second building board (14) and the board fixture (1, 41, 43, 49, 50, 52, 53, 54) to rotate in relation to each other is followed by a step of directly or indirectly attaching the second building board (14) to an underlying support or base.

6. The method according to any one of the preceding claims, comprising the step of attaching the board fixture (1) to an underlying support or base.

7. The method according to any one of the preceding claims, wherein the building boards (11, 14) comprises a front surface (31, 35) disclosing a cut-out (19, 21) for reception of the locking members (15, 17) of the first flange portion (2) during said step of bringing the board fixture (1) and the first building board (11) to rotate in relation to each other.

8. The method according to any one of the preceding claims, wherein the building boards (11, 14) comprises a rear surface (32, 36) disclosing a cut-out (20, 22) for reception of the locking members (16, 18) of the second flange portion (3) during said step of bringing the second building board (14) and the board fixture (1) to rotate in relation to each other.

9. The method according to any one of the preceding claims, wherein the building boards (11, 14) are wall panels.

## Patentansprüche

1. Verfahren zum Verbinden einer ersten Bauplatte (11) mit einer zweiten Bauplatte (14) mittels einer Bauplattenhalterung (1, 41, 43, 49, 50, 52, 53, 54), welche Bauplattenhalterung (1, 41, 43, 49, 50, 52, 53, 54) einen ersten, vorderen Flanschabschnitt (2), einen zweiten, hinteren Flanschabschnitt (3) und einen Gewebeabschnitt (4) umfasst, der die Flanschabschnitte (2, 3) miteinander verbindet und die Bauplattenhalterung (1, 41, 43, 49, 50, 52, 53, 54) mit einem H-förmigen Querschnitt versieht, wobei:
- der erste Flanschabschnitt (2) und der zweite Flanschabschnitt (3) jeweils eine erste Flanschsektion (5, 6) und eine zweite Flanschsektion (7, 8) umfassen,
- die erste Flanschsektion (5) des ersten Flanschabschnitts (2), der Gewebeabschnitt (4) und die erste Flanschsektion (6) des zweiten Flanschabschnitts (3) eine erste Tasche (9) zur Aufnahme eines Randabschnitts (10) der ersten Bauplatte (11) bilden,
- die zweite Flanschsektion (7) des ersten Flanschabschnitts (2), der Gewebeabschnitt (4) und die zweite Flanschsektion (8) des zweiten Flanschabschnitts (3) eine zweite Tasche (12) zur Aufnahme eines Randabschnitts (13) der zweiten Bauplatte (14) bilden,
- zumindest eine der ersten Flanschsektionen (5, 6) ein Verriegelungselement (15, 16) umfasst, das sich in die erste Tasche (9) hinein erstreckt, und
- zumindest eine der zweiten Flanschsektionen (7, 8) ein Verriegelungselement (17, 18) umfasst, das sich in die zweite Tasche (12) hinein erstreckt, wobei das Verfahren die folgenden Schritte umfasst:
- Ausrichten der Bauplattenhalterung (1) relativ zur ersten Bauplatte (11) derart, dass die erste Tasche (9) eine geneigte Ausrichtung gegenüber der ersten Bauplatte (11) aufnimmt,
- Anbringen der ersten Tasche (9) über den Randabschnitt (10) der ersten Bauplatte (11) derart, dass der Randabschnitt (10) der ersten Bauplatte (11) in der ersten Tasche (9) aufgenommen wird, wobei während dieses Schrittes das Verriegelungselement (15, 16) der zumindest einen ersten Flanschsektion (5, 6) wegen der geneigten Ausrichtung nicht das Einsetzen des Randabschnitts (10) der ersten Bauplatte (11) in die erste Tasche (9) verhindert,
- Versetzen der Bauplattenhalterung (1) und der ersten Bauplatte (11) in Rotation relativ zueinander derart, dass das Verriegelungselement (15, 16) der zumindest einen ersten Flanschsektion (5, 6) dazu veranlasst wird, mit dem Randabschnitt (10) der ersten Bauplatte (11) zusammenzuwirken, wodurch die erste Bauplatte (11) darin verhindert wird, sich in eine Querrichtung (B) der Bauplattenhalterung (1, 41, 43, 49, 50, 52, 53, 54) zu bewegen,
- Ausrichten der zweiten Bauplatte (14) relativ zur Bauplattenhalterung (1) derart, dass die zweite Tasche (12) eine geneigte Ausrichtung gegenüber der zweiten Bauplatte (14) aufnimmt,
- Anbringen des Randabschnitts (13) der zweiten Bauplatte (14) in die zweite Tasche (12) derart, dass der Randabschnitt (13) der zweiten Bauplatte (14) in der zweiten Tasche (12) aufgenommen wird, wobei während dieses Schrittes das Verriegelungselement (17, 18) der zumindest einen zweiten Flanschsektion (7, 8) wegen der geneigten Ausrichtung nicht das Einsetzen des Randabschnitts (13) der zweitem Bauplatte (14) in die zweite Tasche (12) verhindert, und
- Versetzen der zweiten Bauplatte (14) und der Bauplattenhalterung (1) in Rotation relativ zueinander derart, dass das Verriegelungselement (17, 18) der zumindest einen zweiten Flanschsektion (7, 8) dazu veranlasst wird, mit dem Randabschnitt (13) der zweiten Bauplatte (14) zusammenzuwirken, wodurch die zweite Bauplatte (14) darin verhindert wird, sich in die Querrichtung (B) der Bauplattenhalterung (1, 41, 43, 49, 50, 52, 53, 54) zu bewegen.

2. Verfahren nach Anspruch 1, wobei der Schritt des Versetzens der Bauplattenhalterung (1, 41, 43, 49, 50, 52, 53, 54) und der ersten Bauplatte (11) in Rotation relativ zueinander das Versetzen der Bauplattenhalterung (1, 41, 43, 49, 50, 52, 53, 54) und der ersten Bauplatte (11) in Rotation relativ zueinander um eine erste Achse, die in Längsrichtung (A) der Bauplattenhalterung (1) verläuft, umfasst.

3. Verfahren nach einem der Ansprüche 1 und 2, wobei der Schritt des Versetzens der zweiten Bauplatte (14) und der Bauplattenhalterung (1, 41, 43, 49, 50, 52, 53, 54) in Rotation relativ zueinander das Versetzen der zweiten Bauplatte (14) und der Bauplattenhalterung (1, 41, 43, 49, 50, 52, 53, 54) in Rotation relativ zueinander um eine zweite Achse, die in Längsrichtung (A) der Bauplattenhalterung (1, 41, 43, 49, 50, 52, 53, 54) verläuft, umfasst.

4. Verfahren nach einem der vorgehenden Ansprüche, wobei vor dem Schritt des Ausrichtens der Bauplattenhalterung (1, 41, 43, 49, 50, 52, 53, 54) gegenüber der ersten Bauplatte (11) ein Schritt der unmittelbaren oder mittelbaren Befestigung der ersten Bauplatte (11) an einer darunter liegenden Unterstützung oder Basis erfolgt.

5. Verfahren nach einem der vorgehenden Ansprüche, wobei nach dem Schritt des Versetzens der zweiten Bauplatte (14) und der Bauplattenhalterung (1, 41, 43, 49, 50, 52, 53, 54) in Rotation relativ zueinander von einem Schritt der unmittelbaren oder mittelbaren Befestigung der zweiten Bauplatte (14) an einer darunter liegenden Unterstützung oder Basis erfolgt.

6. Verfahren nach einem der vorgehenden Ansprüche, umfassend den Schritt der Befestigung der Bauplattenhalterung (1) an einer darunter liegenden Unterstützung oder Basis.

7. Verfahren nach einem der vorgehenden Ansprüche, wobei die Bauplatten (11, 14) eine Vorderfläche (31, 35) umfassen, die einen Ausschnitt (19, 21) zur Aufnahme der Verriegelungselemente (15, 17) des ersten Flanschabschnitts (2) während des Schrittes des Versetzens der Bauplattenhalterung (1) und der ersten Bauplatte (11) in Rotation relativ zueinander offenlegt.

8. Verfahren nach einem der vorgehenden Ansprüche, wobei die Bauplatten (11, 14) eine Hinterfläche (32, 36) umfassen, die einen Ausschnitt (20, 22) zur Aufnahme der Verriegelungselemente (16, 18) des zweiten Flanschabschnitts (3) während des Schrittes des Versetzens der zweiten Bauplatte (14) und der Bauplattenhalterung (1) in Rotation relativ zueinander offenlegt.

9. Verfahren nach einem der vorgehenden Ansprüche, wobei die Bauplatten (11, 14) Wandverkleidungen sind.

## Revendications

1. Procédé pour joindre un premier panneau de construction (11) et un deuxième panneau de construction (14) au moyen d'un support de panneau (1, 41, 43, 49, 50, 52, 53, 54), ledit support de panneau (1, 41, 43, 49, 50, 52, 53, 54) comprenant une première partie de bride avant (2), une deuxième partie de bride arrière (3) et une partie de bande (4) reliant les parties de bride (2, 3) l'une à l'autre donnant au support de panneau (1, 41, 43, 49, 50, 52, 53, 54) une section transversale en H, dans lequel :
- la première partie de bride (2) et la deuxième partie de bride (3) comprennent chacune une première section de bride (5, 6) et une deuxième section de bride (7, 8),
- la première section de bride (5) de la première partie de bride (2), la partie de bande (4) et la première section de bride (6) de la deuxième partie de bride (3) forment une première poche (9) pour recevoir une partie de bord (10) du premier panneau de construction (11),
- la deuxième section de bride (7) de la première partie de bride (2), la partie de bande (4) et la deuxième section de bride (8) de la deuxième partie de bride (3) forment une deuxième poche (12) pour recevoir une partie de bord (13) du deuxième panneau de construction (14),
- au moins l'une des premières sections de bride (5, 6) comprend un élément de verrouillage (15, 16) qui s'étend dans la première poche (9), et
- au moins l'une des deuxièmes sections de bride (7, 8) comprend un élément de verrouillage (17, 18) qui s'étend dans la deuxième poche (12),
le procédé comprenant les étapes consistant à :
- aligner le support de panneau (1) par rapport au premier panneau de construction (11) de telle sorte que la première poche (9) adopte une orientation inclinée vis-à-vis du premier panneau de construction (11),
- amener la première poche (9) au-dessus de la partie de bord (10) du premier panneau de construction (11) de sorte que la partie de bord (10) du premier panneau de construction (11) soit reçue dans la première poche (9), lors de cette étape, l'élément de verrouillage (15, 16) de l'au moins une première section de bride (5, 6) n'empêchant pas l'insertion de la partie de bord (10) du premier panneau de construction (11) dans la première poche (9) en raison de ladite orientation inclinée,
- amener le support de panneau (1) et le premier panneau de construction (11) à tourner l'un par rapport à l'autre de telle sorte que l'élément de verrouillage (15, 16) de l'au moins une première section de bride (5, 6) est amené à interagir avec la partie de bord (10) du premier panneau de construction (11) empêchant au premier panneau de construction (11) de se déplacer dans une direction transversale (B) du support de panneau (1, 41, 43, 49, 50, 52, 53, 54),
- aligner le deuxième panneau de construction (14) par rapport au support de panneau (1) de telle sorte que la deuxième poche (12) adopte une orientation inclinée vis-à-vis du deuxième panneau de construction (14),
- amener la partie de bord (13) du deuxième panneau de construction (14) dans la deuxième poche (12) de telle sorte que la partie de bord (13) du deuxième panneau de construction (14) soit reçue dans la deuxième poche (12), lors de cette étape, l'élément de verrouillage (17, 18) de l'au moins une deuxième section de bride (7, 8) n'empêchant pas l'insertion de la partie de bord (13) du deuxième panneau de construction (14) dans la deuxième poche (12) en raison de ladite orientation inclinée, et
- amener le deuxième panneau de construction (14) et le support de panneau (1) à tourner l'un par rapport à l'autre de telle sorte que l'élément de verrouillage (17, 18) de l'au moins une deuxième section de bride (7, 8) est amené à interagir avec la partie de bord (13) du deuxième panneau de construction (14) empêchant au deuxième panneau de construction (14) de se déplacer dans la direction transversale (B) du support de panneau (1, 41, 43, 49, 50, 52, 53, 54).

2. Procédé selon la revendication 1, dans lequel l'étape consistant à amener le support de panneau (1, 41, 43, 49, 50, 52, 53, 54) et le premier panneau de construction (11) à tourner l'un par rapport à l'autre comprend le fait d'amener le support de panneau (1, 41, 43, 49, 50, 52, 53, 54) et le premier panneau de construction (11) à tourner l'un par rapport à l'autre autour d'un premier axe qui s'étend dans une direction longitudinale (A) du support de panneau (1).

3. Procédé selon l'une quelconque des revendications 1 et 2, dans lequel l'étape consistant à amener le deuxième panneau de construction (14) et le support de panneau (1, 41, 43, 49, 50, 52, 53, 54) à tourner l'un par rapport à l'autre comprend le fait d'amener le deuxième panneau de construction (14) et le support de panneau (1, 41, 43, 49, 50, 52, 53, 54) à tourner l'un par rapport à l'autre autour d'un deuxième axe qui s'étend dans la direction longitudinale (A) du support de panneau (1, 41, 43, 49, 50, 52, 53, 54).

4. Procédé selon l'une quelconque des revendications précédentes, dans lequel l'étape de l'alignement du support de panneau (1, 41, 43, 49, 50, 52, 53, 54) par rapport au premier panneau de construction (11) est précédé d'une étape de fixation directe ou indirecte du premier panneau de construction (11) à un support sous-jacent ou une base sous-jacente.

5. Procédé selon l'une quelconque des revendications précédentes, dans lequel l'étape d'amener le deuxième panneau de construction (14) et le support de panneau (1, 41, 43, 49, 50, 52, 53, 54) à tourner l'un par rapport à l'autre est suivi d'une étape de fixation directe ou indirecte du deuxième panneau de construction (14) à un support sous-jacent ou une base sous-jacente.

6. Procédé selon l'une quelconque des revendications précédentes, comprenant l'étape de fixation du support de panneau (1) à un support sous-jacent ou une base sous-jacent.

7. Procédé selon l'une quelconque des revendications précédentes, dans lequel les panneaux de construction (11, 14) comprennent une surface avant (31, 35) présentant une découpe (19, 21) pour la réception des éléments de verrouillage (15, 17) de la première partie de bride (2) au cours de ladite étape consistant à amener le support de panneau (1) et le premier panneau de construction (11) à tourner l'un par rapport à l'autre.

8. Procédé selon l'une quelconque des revendications précédentes, dans lequel les panneaux de construction (11, 14) comprennent une surface arrière (32, 36) présentant une découpe (20, 22) pour la réception des éléments de verrouillage (16, 18) de la deuxième partie de bride (3) au cours de ladite étape consistant à amener le deuxième panneau de construction (14) et le support de panneau (1) à tourner l'un par rapport à l'autre.

9. Procédé selon l'une quelconque des revendications précédentes, dans lequel les panneaux de construction (11, 14) sont des panneaux muraux.
